# EUROPEAN PATENT SPECIFICATION

(11) **EP 0 459 865 B1**
(45) Date of publication and mention of the grant of the patent: **25.10.1995**
(21) Application number: 91401306.5
(22) Date of filing: 21.05.1991
(51) Int. Cl.: C04B 41/90, C04B 37/02

(54) **Method of protecting ceramic surfaces**
Verfahren zum Schützen von keramischen Oberflächen
Méthode pour protéger les surfaces céramiques

(30) Priority: 31.05.1990 US 531303
(43) Date of publication of application: 04.12.1991
(73) Proprietor: GRUMMAN AEROSPACE CORPORATION, Bethpage, NY 11714 (US)
(72) Inventor: Tobin, Albert G., Smithtown, New York (US)
(74) Representative: Armengaud Ainé, Alain

(56) References cited:
- EP-A- 0 269 480
- US-A- 3 339 267
- US-A- 4 532 190
- US-A- 4 758 814
- CHEMICAL ABSTRACTS, vol. 108, no. 16, April 1988, page 303, abstract no.136533g, Columbus, Ohio, US & JP-A-62297274
- PHILIPS TECHNICAL REVIEW, vol. 35, nos. 7-8, 1975, pages 209-211; R.L. BRONNES et al.: "Ceramic-to-metal bonding with sputtering as a metallization technique"
- CHEMICAL ABSTRACTS, vol. 108, no. 14, April 1988, page 337, abstract no. 117653e, Columbus, Ohio, US; & JP-A-62 297 275 (SUMITOMO ELECTRIC IND., LTD) 24-12-1987
- WORLD PATENT INDEX LATEST, week 8634, Derwent Publications Ltd, London, GB; & JP-A-61 153 227 (KAWASAKI STEEL K.K.) 11-07-1986

## Description

### FIELD OF THE INVENTION

The present invention relates to bonding of metallic layers to the exterior of a ceramic substrate for enhancing the surface load-bearing capability of the ceramic.

### BACKGROUND OF THE INVENTION

Ceramics represent a class of materials which are capable of operating in high-temperature corrosive environments and which offer potentially significant increases in temperature capabilities over structural metals as well as considerable weight savings and cost savings. However, very few structural applications for advanced ceramics in critical load-bearing applications at elevated temperatures have been identified since ceramics are inherently brittle and are sensitive to surface damage. These two characteristics of ceramics at both room and elevated temperatures need to be overcome before ceramics find widespread structural applications. Recently, significant improvements in the strain tolerance of ceramic matrices have been made with the advent of ceramic matrix composites in which fibers, incorporated into the ceramic matrix, permit greater strain tolerance prior to fracture and enhance fracture toughness of the material. These encouraging results increase the likelihood of using ceramics in critical structural applications. However, it does not address the issue of the surface sensitivity of ceramics to physical and/or chemical damage. This surface sensitivity can severely limit the use of ceramics in certain critical applications since failure of the ceramic component quite likely initiates from the surface and could lead to catastrophic failure of the material.

US-A-4532190 discloses a method for producing a metal-ceramics composite material by depositing at least one intermediate metallic layer onto a ceramic layer, an outer layer onto the intermediate layer and subjecting the resulting structure to heat.

### BRIEF DESCRIPTION OF THE INVENTION

The current invention seeks to enhance the surface damage resistance of ceramics in order to enhance surface durability and damage resistance by bonding of an oxidation-resistant metallic layer to the surface of the ceramic. The presence of a ductile metallic layer enhances surface durability by absorbing thermal and mechanical shock and by healing surface flaws in the ceramic thereby reducing the likelihood of a surface induced failure.

With the present invention a method is proposed for depositing a ductile metallic layer on top of a ceramic, the metallic layer being corrosion and oxidation resistant. The bonding of such a layer distributes the point loads across the surface of the ceramic thereby decreasing them and minimizing the creation of surface cracks in the ceramic. The problem in bonding any metal to a ceramic is the mismatch of coefficients of expansion of ceramic materials when compared to those of metals. This thermal expansion mismatch manifests residual stresses at an interface between a metal layer and a ceramic substrate in response to large thermal excursions. Such stresses usually lead to structural failure of the laminated structure.

In order to avoid this problem and achieve satisfactory bonding between an outer metallic layer and a ceramic surface, the present invention relates to a method for enhancing the damage resistance of ceramic surfaces comprising the steps :

depositing a plurality of chemically reactive intermediate metallic layers in the form of coatings or foils onto a ceramic substrate wherein said intermetallic layers are superposed such that each intermetallic layer has a higher thermal coefficient of expansion than the preceding intermetallic layer ;
depositing an outer ductile and oxidation-resistant metal layer to the metallurgically compatible intermediate layers, where the intermediate layers cumulatively grade the thermal expansion coefficient between the substrate and the outer metallic layer;
subjecting the resulting laminated structure to heat for causing partial interdiffusion of the intermediate and outer metallic layers and for causing bonding between the substrate and intermediately adjacent intermediate layer.

The present invention requires the careful selection of intermediate metal layers so that adjoining layers are metallurgically compatible so that embrittlement of the various metallic layers is avoided.

The end result of the present multi-layered ceramic configuration is a structurally sound ceramic structure wherein surface damage is minimized by a protective encapsulation of metallic material which itself maintains high oxidation and corrosion resistance.

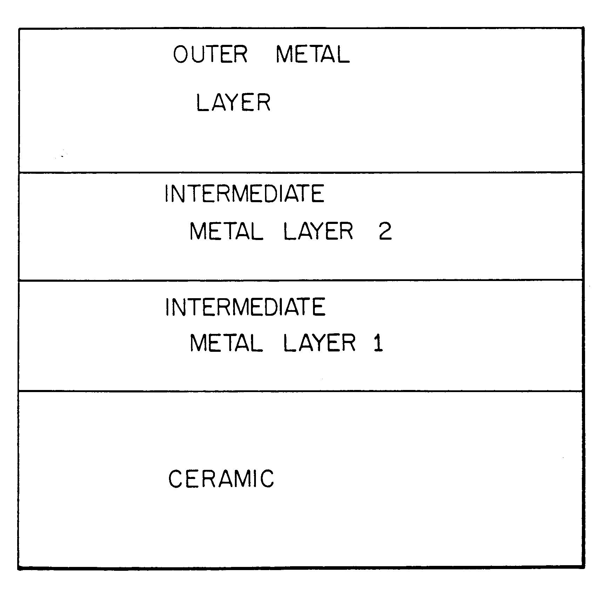

### BRIEF DESCRIPTION OF THE FIGURE

The above-mentioned objects and advantages of the present invention will be more clearly understood when considered in conjunction with the accompanying drawing, in which:
the figure is a schematic cross-sectional view of a typical multi-layer structure in accordance with the present invention.

### DETAILED DESCRIPTION OF THE INVENTION

Viewing the figure, a base or substrate of ceramic is illustrated. It is the primary object of the invention to bond a metal encapsulation to the ceramic for the purpose of distributing point loads on the surface of the ceramic thereby decreasing these loads and, consequently, minimizing surface cracks. As previously mentioned, the bonding of a metal layer to ceramic results in a thermal expansion mismatch which results in residual stresses at the metal-ceramic interface in response to large thermal excursions. In accordance with the present invention, multiple intermediate layers are employed between the ceramic and outer metal layer, as indicated in the figure. The intermediate layer 1 will have a lower coefficient of expansion than the adjoining intermediate layer 2. In effect, the intermediate layers 1 and 2 form a coefficient of expansion gradient between the ceramic having a relatively low coefficient of expansion and the outer metal layer which has a relatively high coefficient of expansion. This gradation or gradient of expansion coefficients between the internal ceramic and encapsulating outer metal layer effectively bridges the thermal expansion mismatch between the inner and outer materials so that effective bonding of metal to ceramic can take place without the usual generation of residual stresses at their interface.

It is to be emphasized that, although only two intermediate metal layers have been illustrated, this is by way of simplified example only. The number of layers will primarily depend upon the choice of the outer metal layer and the particular ceramic involved which, of course, will depend upon the environment in which the laminated ceramic material is to be used. A primary design consideration for the outer metal layer is the ability of this layer to withstand oxidation in response to thermal excursions in the expected environment while also being capable of withstanding the effects of corrosion and oxidation in an encountered environment. In certain applications the metal must also be chosen to withstand anticipated erosion effects of the environment.

Given the concept of the present invention, namely the build-up of successive intermediate metal layers between an outer metal layer and ceramic to bridge the difference in coefficients of expansion therebetween, the actual choice of materials is routine experimentation for one having ordinary skill in the art. However, these choices should be governed by the following metallurgical principles. The intermediate layer 1 must be metallurgically reactive with the ceramic so that there is chemical bonding therebetween. The intermediate metal layer 1 must also exhibit ductility to avoid fracture in use. Second, each of the metals used in the various layers must be metallurgically compatible. That is, the metal of the outer layer must be metallurgically soluble in intermediate layer 2 and a similar relationship must exist between intermediate layer 2 and intermediate layer 1. Otherwise, non-compatible metals will cause embrittlement that increases the likelihood of structural failure for the resultant laminated structure.

At least five "ceramic" materials are anticipated as having substantial usefulness in accordance with the present invention. Of course, the following examples are not an all-inclusive list. The ceramics include silicon nitride, silicon carbide, aluminum oxide, zirconium oxide, and carbon-carbon (carbon fiber composite). Ductile alloys which have outstanding oxidation resistance, and therefore likely candidates for the outer metal layer, include material in the group: FeCrAlY, NiCr, FeNiCr, Pt, Rh, Os, Ir, Pd, and NiCrAlY.

By way of example, the following metals are anticipated as serving well for intermediate metal layers, capable of possessing thermal expansion coefficients which are intermediate the ceramic phase and the outer metal layer. These typically include: Ti, V, and Zr. These metals will chemically bond to the surface of a ceramic to form either a carbide, nitride, or suboxide, and are intermediate in expansion coefficient between the ceramic and outer metal layer.

A first example of the present invention anticipates the utilization of silicon nitride ceramics (Si₃N₄). For Si₃N₄, a four-layer composite is envisioned in which the innermost intermediate layer in contact with a Si₃N₄ substrate is Zr. The next intermediate layer consists of Ti. The following intermediate layer is V and the outer metal layer is FeCrAlY alloy. During a high temperature vacuum annealing heat treatment for this system, the Zr will chemically bond to the Si₃N₄ by forming a ZrN layer. The Ti layer is soluble in the Zr layer while the V layer is soluble in the Ti layer. The FeCrAlY layer is soluble in the V layer. The expansion coefficients of this system are graded in the following order: Si₃N₄, Zr, Ti, FeCrAlY. Thus, a ductile metal-ceramic layer which is oxidation resistant can be developed to protect the Si₃N₄ surface. The thickness of the various layers will be determined by the diffusivity of the various metals in each other during the time-temperature exposure of the ceramic part, as well as by the environmental exposure anticipated. These determinations may be accomplished by routine experimentation by one having ordinary skill in the art.

SiC ceramic materials may be protected with graded metallic layers in the same manner as previously described in connection with Si₃N₄ since Zr will readily form a carbide layer to bond to the SiC. Accordingly, the following arrangement of layers is anticipated as being effective: SiC, Zr, Ti, V, and FeCrAlY.

For a carbon-carbon substrate material, the following arrangement is proposed: C-C, Zr, Ti, V, and FeCrAlY.

For a ceramic substrate of ZrO₂, two intermediate layers are desirable, namely, V and FeCrAlY.

The FeCrAlY type alloy may be replaced by any of the following alloy systems as the outer metal layer, depending upon oxidizing conditions:
1) Nicr
2) FeCrNi (stainless steel)
3) Pt, Rh, Os, Ir, and Pd.
The utilization of the second group, namely stainless steel, is preferable where relatively lower temperatures are to be anticipated, the utilization of stainless steel making cost savings possible. In contrast, the third group is more effective at higher temperatures but a commensurate increase in materials costs results.

Interdiffusion of the various layers is carried out in a vacuum annealing process for time and temperature based upon interdiffusion coefficients of the system and reaction rates with the ceramic substrate. Choices would be determined after routine experimentation. Deposition of the metallic layers may be carried out by various conventional coating processes such as physical vapor deposition, chemical vapor deposition, electroplating, plasma arc spraying, or other coating processes as are commonly used by those skilled in the art of plating of metals on various substrates. In addition, joining of layers of metallic foils of the corresponding materials via a diffusion bonding operation is also envisioned.

In summary, the preceding description of the invention offers a method for bonding a ductile oxidation resistant metal layers to a ceramic surface to enhance the resistance of the ceramic to surface damage by thermal, mechanical, or chemical means. This is accomplished by taking advantage of the chemical reactivity of certain metals with the ceramic and by grading the thermal expansion coefficients of these various metals so as to form intermediate layers of a multi-layer composite. The intermediate metallic layers are metallurgically compatible with each other and an outer metal layer is chosen for its oxidation and corrosion resistance for an anticipated environment. Deposition of the various layers forming the multi-layer composite is performed by conventional coating techniques or in bonding of metallic foils via hot pressing and is followed by a suitable vacuum annealing process to cause partial interdiffusion of the metallic layers and bonding with the ceramic phase.

It should be understood that the invention is not limited to the exact details of construction shown and described herein for obvious modifications falling into the scope of the appended claims will occur to persons skilled in the art.

## Claims

1. A method for enhancing the damage resistance of ceramic surfaces comprising the steps :
depositing a plurality of chemically reactive intermediate metallic layers in the form of coatings or foils onto a ceramic substrate wherein said intermetallic layers are superposed such that each intermetallic layer has a higher thermal coefficient of expansion than the preceding intermetallic layer ;
depositing an outer ductile and oxidation-resistant metal layer to the metallurgically compatible intermediate layers, where the intermediate layers cumulatively grade the thermal expansion coefficient between the substrate and the outer metallic layer;
subjecting the resulting laminated structure to heat for causing partial interdiffusion of the intermediate and outer metallic layers and for causing bonding between the substrate and intermediately adjacent intermediate layer.

2. The method set forth in claim 1 wherein the ceramic substrate material is chosen from the group consisting of : Si₃N₄, SiC, Al₂O₃, ZrO₂, and carbon-carbon.

3. The method set forth in claim 1 wherein the intermediate metallic layer material is chosen from the group consisting of : Ti, Zr, and V.

4. The method set forth in claim 1 wherein the outer metallic layer material is chosen from the group consisting of Pt, Pd, Os, Ir, Rh, and the alloy systems FeCrAlY, FeNiCr, NiCr, and NiCrAlY.

5. The method set forth in claim 2 wherein the intermediate metallic layer material is chosen from the group consisting of : Ti, Zr, and V and wherein the outer metallic layer material is chosen from the group consisting of Pt, Pd, Os, Ir, Rh, and the alloy systems FeCrAlY, FeNiCr, NiCr, and NiCrAlY.

6. A laminated metal-ceramic composite with enhanced surface durability, comprising :
a plurality of chemically reactive intermediate metallic layers deposited on a ceramic substrate in the form of coating or foils, the intermediate layer immediately adjacent to the substrate being bonded thereto, the intermediate metallic layers being metallurgically compatible with one another and wherein said intermetallic layers are superposed such that each intermetallic layer has a higher thermal coefficient of expansion than the preceding intermetallic layer ;
a ductile and oxidation-resistant outer metallic layer interdiffused with the intermediate layers and metallurgically compatible with them, wherein a gradient of thermal expansion is produced by the intermediate layers bridging the disparate thermal coefficients of the ceramic and the outer metallic layer.

7. The composite set forth in claim 6 wherein the ceramic substrate material is chosen from the group consisting of : Si₃N₄, SiC, Al₂O₃, ZrO₂, and carbon-carbon.

8. The composite set forth in claim 6 wherein the intermediate metallic layer material is chosen from the group consisting of : Ti, Zr, and V.

9. The composite set forth in claim 6, wherein the outer metallic layer material is chosen from the group consisting of Pt, Pd, Os, Ir, Rh, and the alloy systems FeCrAlY, FeNiCr, NiCr, and NiCrAlY.

10. The composite set forth in claim 7, wherein the intermediate metallic layer material is chosen from the group consisting of : Ti, Zr, and V and wherein the outer metallic layer material is chosen from the group consisting of Pt, Pd, Os, Ir, Rh, and the alloy systems FeCrAlY, FeNiCr, NiCr, and NiCrAlY.

## Patentansprüche

1. Verfahren zum Verbessern der Widerstandsfähigkeit gegen Beschädigung keramischer Oberflächen, welches die folgenden Schritte enthält:
Niederschlagen mehrerer chemisch reaktiver Zwischen-Metallschichten in Form von Beschichtungen oder Folien auf einem keramischen Substrat, wobei die Zwischen-Metallschichten so aufeinandergeschichtet sind, daß jede Zwischen-Metallschicht einen höheren thermischen Ausdehnungskoeffizienten als die vorhergehende Zwischen-Metallschicht aufweist;
Niederschlagen einer zu den Zwischenlagen metallurgisch kompatiblen äußeren verformbaren und gegen Oxidation resistenten Metallschicht, wobei die Zwischenschicht kumulativ den thermischen Ausdehnungskoeffizienten zwischen dem Substrat und der äußeren Metallschicht abstufen;
Wärmebehandlung der resultierenden Laminatstruktur zum Verursachen von partieller Interdiffusion der Zwischen-Metallschicht und äußeren Metallschicht und zum Bilden von Bindungen zwischen dem Substrat und der unmittelbar angrenzenden Zwischenschicht.

2. Verfahren gemäß Anspruch 1,
wobei das keramische Substratmaterial aus der Gruppe gewählt wird, die Si₃N₄, SiC, Al₂O₃, ZrO₂ und Kohlenstoff-Kohlenstoff aufweist.

3. Verfahren gemäß Anspruch 1,
wobei das Material der Zwischen-Metallschicht aus der Gruppe gewählt wird, die Ti, Zr und V aufweist.

4. Verfahren gemäß Anspruch 1,
wobei das Material der äußeren Metallschicht aus der Gruppe gewählt wird, die Pt, Pd, Os, Ir, Rh und die Legierungssysteme FeCrAlY, FeNiCr, NiCr und NiCrAlY aufweist.

5. Verfahren gemäß Anspruch 2,
wobei das Material der Zwischen-Metallschicht aus der Gruppe gewählt wird, die Ti, Zr und V beinhaltet, und wobei das Material der äußeren Metallschicht aus der Gruppe gewählt wird, die Pt, Pd, Os, Ir, Rh und die Legierungssysteme FeNiCr, NiCr und NiCrAlY aufweist.

6. Ein laminierter metall-keramischer Verbundkörper mit verbesserter Oberflächenbeständigkeit, der enthält:
mehrere chemisch reaktive Zwischen-Metallschichten, die auf einem keramischen Substrat in Form von Beschichtungen oder Folien niedergeschlagen sind, wobei die an das Substrat unmittelbar angrenzende Zwischenschicht an diese gebunden ist, die Zwischen-Metallschichten miteinander metallurgisch kompatibel sind und worin die Zwischen-Metallschichten so übereinander geschichtet sind, daß jede Zwischen-Metallschicht einen höheren thermischen Ausdehnungskoeffizienten als die vorhergehende Zwischen-Metallschicht aufweist;
eine verformbare und gegen Oxidation resistente äußere Metallschicht, die mit den Zwischenlagen interdiffundiert ist und mit ihnen metallurgisch kompatibel ist, wobei ein Gradient der thermischen Ausdehnung von den Zwischenschichten gebildet wird, die den ungleichartigen thermischen Koeffizienten der keramischen und der äußeren Metallschicht überbrücken.

7. Schichtkörper gemäß Anspruch 6,
wobei das keramische Substratmaterial aus der Gruppe gewählt ist, die Si₃N₄, SiC, Al₂O₃, ZrO₂ und Kohlenstoff-Kohlenstoff aufweist.

8. Schichtkörper gemäß Anspruch 6,
wobei das Material der Zwischen-Metallschicht aus der Gruppe gewählt ist, die Ti, Zr und V aufweist.

9. Schichtkörper gemäß Anspruch 6,
wobei das Material der äußeren Metallschicht aus der Gruppe gewählt ist, die Pt, Pd, Os, Ir, Rh und die Legierungssysteme FeCrAlY, FeNiCr, NiCr und NiCrAlY aufweist.

10. Schichtkörper gemäß Anspruch 7,
wobei das Material der Zwischen-Metallschicht aus der Gruppe gewählt ist, die Ti, Zr und V beinhaltet, und worin das Material der äußeren Metallschicht aus der Gruppe gewählt wird, die Pt, Pd, Os, Ir, Rh und die Legierungssysteme FeCrAlY, FeNiCr, NiCr und NiCrAlY beinhaltet.

## Revendications

1. Méthode pour renforcer la résistance à l'endommagement de surfaces céramiques qui comprend les étapes consistant à :
- déposer une pluralité de couches métalliques intermédiaires chimiquement réactives sous la forme de revêtements ou de feuilles minces sur un substrat céramique selon lequel lesdites couches intermétalliques sont superposées de façon que chaque couche intermédiaire possède un coefficient de dilatation thermique supérieur à celui de la couche intermétallique précédente ;
- déposer une couche extérieure de métal ductile et résistant à l'oxydation sur les couches intermédiaires métallurgiquement compatibles, les couches intermédiaires échelonnant cumulativement le coefficient de dilatation thermique entre le substrat et la couche métallique extérieure ;
- soumettre à la chaleur la structure stratifiée résultante de façon à provoquer une interdiffusion partielle des couches métalliques intermédiaires et extérieures et pour provoquer la liaison entre le substrat et la couche intermédiaire adjacente de façon intermédiaire.

2. Méthode selon la revendication 1 dans laquelle le matériau du substrat céramique est choisi dans le groupe comprenant : Si₃ N₄, SiC, Al₂ O₃, ZrO₂ et le carbone-carbone.

3. Méthode selon la revendication 1 dans laquelle le matériau de la couche métallique intermédiaire est choisi dans le groupe comprenant : Ti, Zr et V.

4. Méthode selon la revendication 1 dans laquelle le matériau de la couche métallique extérieure est choisi dans le groupe comprenant Pt, Pd, Os, Ir, Rh et les systèmes d'alliage FeCrAlY, FeNiCr, NiCr, NiCr et NiCrAlY.

5. Méthode selon la revendication 2 dans laquelle le matériau de la couche métallique intermédiaire est choisi dans le groupe comprenant : Ti, Zr et V et dans laquelle le matériau de la couche métallique extérieure est choisi dans le groupe comprenant : Pt, Pd, Os, Ir, Rh et les systèmes d'alliages FeCrAlY, FeNiCr, NiCr et NiCrAlY.

6. Composite stratifié métal-céramique ayant une durabilité de surface renforcée comprenant :
- une pluralité de couches métalliques intermédiaires chimiquement réactives déposées sur un substrat céramique sous la forme d'un revêtement ou de feuilles minces, la couche intermédiaire immédiatement adjacente au substrat étant liée à ce dernier, les couches métalliques intermédiaires étant métallurgiquement compatibles les unes avec les autres et lesdites couches intermétalliques étant superposées de manière que chaque couche intermétallique possède un coefficient de dilatation thermique plus élevé que celui de la couche intermétallique précédente.
- une couche métallique extérieure ductile et résistant à l'oxydation, interdiffusée avec les couches intermédiaires et métallurgiquement compatibles avec elles, un gradient de dilatation thermique étant ainsi produit par les couches intermédiaires pontant les coefficients thermiques disparates de la couche céramique et de l'autre couche métallique.

7. Composite selon la revendication 6 dans lequel le matériau substrat céramique est choisi dans le groupe comprenant : Si₃ N₄, SiC, Al₂ O₃, ZrO₂ et le carbone-carbone.

8. Composite selon la revendication 6 dans lequel le matériau de la couche métallique intermédiaire est choisi dans le groupe comprenant : Ti, Zr et V.

9. Composite selon la revendication 6 dans lequel le matériau de la couche métallique extérieure est choisi dans le groupe comprenant Pt, Pd, Os, Ir, Rh et les systèmes d'alliages FeCrAlY, FeNiCr, NiCr et NiCrAlY.

10. Composite selon la revendication 7 dans lequel le matériau de la couche métallique intermédiaire est choisi dans le groupe comprenant : Ti, Zr et V et dans lequel le matériau de la couche métallique extérieure est choisi dans le groupe comprenant Pt, Pd, Os, Ir, Rh et les systèmes d'alliages FeCrAlY, FeNiCr, NiCr et Ni CrAlY.
